Europäisches Patentamt

European Patent Office

Office européen des brevets

(11) Veröffentlichungsnummer: **0 443 447 A2**

# (12) EUROPÄISCHE PATENTANMELDUNG

(21) Anmeldenummer: **91102139.2**

(22) Anmeldetag: **15.02.91**

(51) Int. Cl.5: **H04B 10/10**

(30) Priorität: **22.02.90 DE 4005517**

(43) Veröffentlichungstag der Anmeldung:
**28.08.91 Patentblatt 91/35**

(84) Benannte Vertragsstaaten:
**AT BE CH DE DK ES FR GB GR IT LI LU NL SE**

(71) Anmelder: **SenSys AG**
**Im Ziel 122**
**CH-8434 Kaiserstuhl(CH)**

(72) Erfinder: **Heck, Marco**
**Ulmenallee 138**
**W-4040 Neuss 21(DE)**

(74) Vertreter: **Döring, Wolfgang, Dr. Ing. et al**
**Mörikestrasse 18**
**W-4000 Düsseldorf 30(DE)**

(54) Anordnung zur wellenleiterlosen bidirektionalen Licht- oder infrarotübertragung von elektrischen Signalen.

(57) Eine Anordnung zur wellenleiterlosen Licht- oder Infrarotübertragung von elektrischen Signalen, insbesondere Tondarbietungen, Digitalsignalen, Meßwerten oder bewegten Fernsehbildern, ermöglicht die Übertragung der Signale zwischen zwei gleichartigen Vorrichtungen der Anordnung zur gleichen Zeit in beiden Richtungen. Mehrere solcher Anordnungen können gleichzeitig nebeneinander betrieben werden. Die Ausbreitung der optischen Strahlung zwischen den beiden Vorrichtungen erfolgt direkt oder durch Reflektion, Streuung oder Beugung. Durch geeignete Wahl der Übertragungsparameter kann der schaltungstechnische Aufwand besonders klein gehalten werden, da für jede Vorrichtung nur ein frequenzbestimmender Oszillator sowohl für die Aussendung als auch für den Empfang erforderlich ist.

FIG. 1

EP 0 443 447 A2

Die vorliegende Erfindung betrifft eine Anordnung zur wellenleiterlosen bidirektionalen Licht- oder Infrarotübertragung von elektrischen Signalen mit den Merkmalen des Oberbegriffs des Patentanspruchs 1.

Es ist bekannt, elektrische Signale mittels modulierter optischer Strahlung zu übertragen; es können folgende Verfahren unterschieden werden:

a) Fernwirksysteme

Die Informationsübertragung erfolgt meist durch direkte Steuerung der optischen Leistung der Strahlungsquelle mit der digitalen Nachrichtenfunktion. Beispiel: Fernbedienung für Unterhaltungselektronik. Diesem System haftet der Nachteil an, daß zu einem Zeitpunkt nur eine Nachricht in einer Richtung übertragen werden kann.

b) Tonübertragungssysteme

Bekannt ist die Infrarot-Tonübertragung z.B. des Fernseh-Begleittons zu einem batteriegespeisten Kopfhörer. Das Funktionsprinzip beruht auf der Frequenzmodulation eines Unterträgers mit der Nachrichtenfunktion, wobei eine Infrarot-Strahlungsquelle mit der Momentanfrequenz des modulierten Unterträgers ein- und ausgeschaltet wird. Hierbei ist jedoch ein direkter Sichtkontakt zwischen Sender und Empfänger erforderlich, und es wird nur in einer Richtung übertragen.

c) Tonübertragungssytem, bidirektional

Bekannt ist die Infrarot- Tonübertragung gemäß b), wobei zur Erzielung einer Zweiwegverbindung eine Bündelung der von jedem optischen Sender ausgehenden modulierten Strahlung dergestalt notwendig ist, daß die emittierte Strahlung jeweils nur den Empfänger der Gegenstation, nicht aber den eigenen optischen Empfänger trifft (Zeitschrift ELEKTOR: Lichttelefon, Mai 1983, Seite 53 ff und ELEKTOR: Weitbereichs-IR-Sender/Empfänger, November 1987, Seite 52 ff., Elektor-Verlag, 5133 Gangelt 1). Der Nachteil hierbei ist, daß die miteinander kommunizierenden Stationen exakt aufeinander ausgerichtet werden müssen.

Es ist ferner möglich, zwischen zwei Vorrichtungen elektrische Signale auf optischem Wege mittels Frequenzmodulation und Frequenzdemodulation zu übertragen, indem man jede Vorrichtung mit einem Sendeteil und einem Empfangsteil versieht und sowohl der Sendeteil als auch der Empfangsteil einen Frequenzoszillator zur Frequenzmodulation und Frequenzdemodulation aufweisen. Hierbei müssen somit insgesamt vier Oszillatoren und vier verschiedene Frequenzen verwendet werden. Eine solche Anordnung muß daher sehr aufwendig ausgestaltet sein.

Aus der DE-OS 38 32 485 ist eine Datenverarbeitungsanlage mit einem zentralen Rechner und mehreren hiervon um wenigstens einige Meter entfernt angeordneten Datenendgeräten, die mit dem Rechner zur Übermittlung der Daten in Verbindung stehen, bekannt, bei der sowohl der Rechner als auch die Datenendgeräte Sender und Empfänger für Infrarotsignale aufweisen, die Datenübermittlung über IR-Strahlen erfolgt und der Rechner sukzessive mit jedem Datenendgerät zusammenarbeitet. Eine solche Anlage erlaubt somit den bidirektionalen Informationsaustausch zwischen Zentraleinheit und Peripherie. Offensichtlich ist jedoch mit dieser Anlage kein gleichzeitiger bidirektionaler Informationsaustausch möglich.

Der Erfindung liegt die Aufgabe zugrunde, eine Anordnung der angegebenen Art zu schaffen, mit der mit einem besonders geringen baulichen Aufwand die gleichzeitige im wesentlichen störungsfreie bidirektionale Übertragung von elektrischen Signalen zwischen zwei Vorrichtungen möglich ist.

Diese Aufgabe wird erfindungsgemäß bei einer Anordnung der angegebenen Art durch die kennzeichnenden Merkmale des Patentanspruchs 1 gelöst.

Erfindungsgemäß wird bei den zwei miteinander kommunizierenden Vorrichtungen einer Anordnung jeweils das vom optischen Empfänger gelieferte elektrische Signal in einer Mischstufe mit der erzeugten Schwingung des Frequenzoszillators dieser Vorrichtung (mit der Sendefunktion modulierten Frequenz des Oszillators) gemischt. Hierbei entsteht unter anderem eine Summenfrequenz aus der mit der Sendefunktion modulierten Oszillatorfrequenz und der mit der Empfangsfunktion modulierten Oszillatorfrequenz der anderen Vorrichtung. Diese Summenfrequenz wird dann weiterverarbeitet, d.h. demoduliert. Aus dem demodulierten Signal wird die Empfangsfunktion ermittelt, da die Sendefunktion dieser Vorrichtung bekannt ist.

Die Frequenzoszillatoren beider Vorrichtungen besitzen unterschiedliche Mittenfrequenzen. Mit nur einem Frequenzoszillator pro Vorrichtung kann somit sowohl die Pulsfolgefrequenz für den optischen Emitter erzeugt werden als auch die vom optischen Empfänger gelieferte Empfangsfrequenz auf die wohldefinierte und feste Zwischenfrequenz (Summenfrequenz) umgesetzt werden. Die vom optischen Emitter auf den optischen Empfänger der selben Vorrichtung direkt übergekoppelte Strahlung führt nicht zu einer Beeinträchtigung, da das (schwache) empfangene elektrische Signal der Gegenstation ohnehin mit genau dieser Frequenz zur Summenfrequenz gemischt wird. Diese Summenfrequenz wird dann einer Frequenzdemodulation unterzogen, wodurch ein Signal entsteht, das aus der linearen Überlagerung der zu empfangenden mit der auszusendenden Nachrichtenfunktion besteht, da zur Bildung der Zwischenfrequenz (Summenfrequenz) das frequenzmodulierte Signal des Frequenzoszillators dieser Vorrichtung verwendet wird.

In Weiterbildung der Erfindung sind die Mittenfrequenzen der Frequenzoszillatoren beider Vorrichtungen veränderlich, wobei gewisse wohldefinierte Frequenzen (Kanäle) wählbar sind. Die Frequenzoszillatoren beider Vorrichtungen weisen dabei zweckmäßigerweise eine Vielzahl von einander zugeordneten Mittenfrequenzpaaren auf, deren Frequenzsumme jeweils den gleichen konstanten wohl definierten Wert besitzt. Das bedeutet, daß eine Vorrichtung einer erfindungsgemäß ausgebildeten Anordnung immer nur mit einer solchen anderen Vorrichtung kommunizieren kann, deren Oszillatormittenfrequenz sich mit der Oszillatormittenfrequenz der zugehörigen Vorrichtung genau zu diesem konstanten wohldefinierten Wert addieren läßt. Durch Wahl der entsprechenden Mittenfrequenzen der zugehörigen Vorrichtungen kann somit festgelegt werden, welche Vorrichtung mit welcher anderen Vorrichtung kommunizieren soll.

Im einzelnen ist es dabei vorteilhaft vorzugsweise zwei Gruppen von Vorrichtungen zu definieren. So sollen sich die Vorrichtungen der Anordnungen in vorzugsweise zwei Gruppen I und II einteilen lassen, und zwar genau so, daß stets eine Vorrichtung der Gruppe I mit einer Vorrichtung der Gruppe II kommuniziert. Kommunizieren bedeutet, daß elektrische Signal, die Tondarbietungen, Digitalsignale, Meßwerte oder bewegliche Fernsehbilder darstellen, zwischen beiden Vorrichtungen gleichzeitig in beiden Richtungen übertragen werden. Es lassen sich dann Frequenzzuordnungen zu frei bestimmbaren Kanalbezeichnungen wählen, und zwar genau so, daß eine Vorrichtung der Gruppe I genau dann und nur dann mit einer Vorrichtung der Gruppe II kommuniziert, wenn an beiden Vorrichtungen die gleiche Kanalbezeichnung eingestellt ist. Das bedeutet, daß für alle Vorrichtungen aus einer Gruppe die gleiche Zuordnung zwischen Mittenfrequenz des Frequenzoszillators und der Kanalbezeichnung gelten muß.

Erfindungsgemäß erfolgt die Zuordnung von Kanälen und Mittenfrequenzen jedoch nicht willkürlich, sondern vielmehr derart, daß die arithmetische Summe der Frequenzen aus Gruppe I und II, die jeweils zu einem Kanal gehören, stets eine konstante und kanalunabhängige Summe ergibt.

Die Summenfrequenz an der Mischstufe ist dann eine bekannte und wohldefinierte Frequenz, wenn an den kommunizierenden Vorrichtungen die gleiche Kanalwahl erfolgt.

Jede der Vorrichtungen kann somit gleichzeitig während der Ausstrahlung von Tondarbietungen, digitalen Signalen, Meßwerten oder bewegten Fernsehbildern die Aussendungen einer anderen gleichartigen Vorrichtung empfangen und auswerten. Werden mehrere Vorrichtungen in optischer Reichweite nebeneinander betrieben, so kann über die Wahl der Mittenfrequenz eine bestimmte der mehreren Vorrichtungen gezielt angesprochen werden. Dies setzt natürlich voraus, daß die anzusprechende Vorrichtung bezüglich ihres Empfangteils, besonders hinsichtlich der elektrischen Filterung, für diese gewählte Mittenfrequenz empfindlich ist.

Die Mittenfrequenz der Frequenzoszillatoren wird vorzugsweise durch einen PLL(Phase-Locked-Loop)-Regelkreis stabilisiert. Ein solcher Regelkreis erlaubt das sehr präzise Einhalten einer vorgegebenen Mittenfrequenz, während kurzfristige Änderungen der Mittenfrequenz, wie für die Frequenzmodulation notwendig, möglich sind. Die Verwendung einer Phase-Locked-Loop-Regelung erlaubt außerdem in einfacher Weise, die Mittenfrequenz in einem gewissen Frequenzraster einzustellen (Kanalwahl).

Vorzugsweise finden Lumineszenzdioden als optische Emitter Verwendung. Die Wellenlänge der ausgesandten Strahlung liegt zweckmäßigerweise im Bereich von 380 nm bis 1.000 nm. Die Wellenlänge der optischen Strahlung hat auf die Funktionsweise der Anordnung keinen Einfluß; sie kann mithin frei gewählt werden.

Besonders vorteilhaft ist die Verwendung von Lumineszenzdioden für den Infrarotbereich mit einer Wellenlänge von 750 nm bis 1.000 nm, da aufgrund der Bauelementetechnologie bei diesen Dioden ein besonders großer Wirkungsgrad möglich ist und folglich ein großer Strahlungsfluß erzielt wird. Eine große optische Leistung wirkt sich günstig bezüglich der möglichen Reichweite der Übertragung aus.

Hinsichtlich einer großen Übertragungsreichweite ist es ferner vorteilhaft, den Stromverlauf durch die optischen Emitter sinus-halbwellenförmig zu steuern. Das bedeutet, daß die vom Frequenzoszillator erzeugte frequenzmodulierte und sinusförmige Schwingung direkt den Stromverlauf durch die Lumineszenzdioden steuert, und zwar so, daß während der positiven Sinushalbwelle der Strom durch die Dioden proportional zum Augenblickswert der positiven Sinushalbwelle des Frequenzoszillators ist. Während der negativen Sinushalbwelle der Schwingung des Frequenzoszillators soll kein Strom durch die Lumineszenzdioden fließen.

Durch diese Form der Diodenstromsteuerung ist der Grundwellenanteil der frequenzmodulierten Schwingung im Spektrum der abgestrahlten optischen Leistung maximal hinsichtlich des Signalwirkungsgrades der Dioden.

Es kann vorteilhaft sein, mehrere optische Empfänger in einer Vorrichtung einzusetzen, da hierdurch eine Reichweitenvergrößerung erzielt wird. Als optische Empfänger sind Foto-Sperrschichtempfänger (Fotodioden) besonders geeignet. Es versteht sich, daß die optischen Empfänger für die von den optischen Emittern abgegebene Strahlung empfindlich sind.

Fotodioden mit großen fotoempfindlichen Flächen sind günstig, da von ihnen naturgemäß mehr optische Strahlung aufgefangen wird. Eine Steigerung der fotoempfindlichen Fläche im Sinne einer großen Übertragungsreichweite ist durch die Verwendung mehrerer paralleler Fotodioden möglich.

Da die auszustrahlende Nachrichtenfunktion vorliegt, kann diese insbesondere in einer Subtrahierstufe aus dem Signal des Frequenzdemodulators entfernt werden, so daß die Empfangs-Nachrichtenfunktion ungestört erhalten wird.

Die Erfindung wird nachfolgend anhand von Ausführungsbeispielen in Verbindung mit der Zeichnung im einzelnen erläutert. Es zeigen:

Figur 1    ein Blockdiagramm, in dem der schematische Aufbau von einer Vorrichtung der zwei Vorrichtungen dieser Art aufweisenden erfindungsgemäßen Anordnung dargestellt ist; und

Figur 2    ein Blockdiagramm einer in der Praxis verwendeten Ausführungsform.

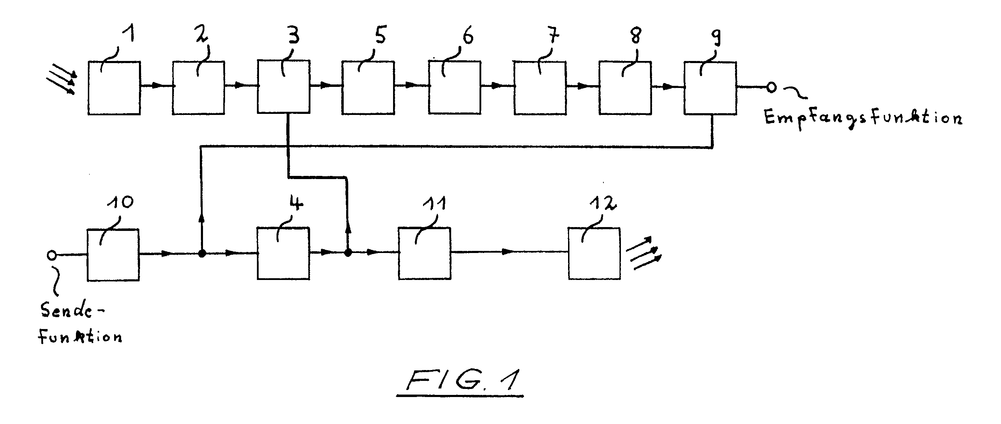

Die in Figur 1 dargestellte Vorrichtung besitzt ein Tiefpaßfilter 10, dem die zu übertragende Sendefunktion zugeführt wird. Dieser Tiefpaß begrenzt das Frequenzspektrum der Sendefunktion auf z.B. 20 kHz.

Mit diesem frequenzbandbegrenzten Signal wird ein Frequenzoszillator 4 frequenzmoduliert. Dieser Oszillator ist durch einen Phase-Locked-Loop-Regelkreis in bekannter Art in bezug auf seine Mittenfrequenz stabilisert. In einfacher und bekannter Weise läßt sich die Mittenfrequenz eines solchen stabilisierten Oszillators um feste Frequenzbeträge variieren. Diese Mittenfrequenz beträgt bei diesem Ausführungsbeispiel 2,76 MHz. Der erzielbare Frequenzhub durch die modulierende Sendefunktion soll vorteilhaft 10 kHz nicht überschreiten.

Die vom Oszillator 4 gelieferte sinusförmige Schwingung steuert eine Stromquelle 11 derart, daß diese einen sinus-halbwellenförmigen Strom durch die als optische Emitter 12 verwendeten Lumineszenzdioden treibt. Bei diesem Ausführungsbeispiel finden Infrarot-Lumineszenzdioden Verwendung, deren emittierte Strahlung im Wellenlängenbereich 830 nm liegt. Der optische Emitter 12 strahlt eine leistungsmodulierte optische Strahlung in den umgebenden Raum ab.

Diese leistungsmodulierte Strahlung gelangt beispielsweise durch Reflektion an Gegenständen oder auch direkt auf den optischen Empfänger 1 einer weiteren gleichartigen Vorrichtung (nicht dargestellt) dieser Anordnung. Diese beiden Vorrichtungen, zwischen denen die Signale übertragen werden, unterscheiden sich ausschließlich in der gewählten Mittenfrequenz des jeweiligen stabilisierten Frequenzoszillators 4.

Die auf den optischen Empfänger 1 der anderen Vorrichtung (für deren Bauteile die gleichen Bezugszeichen verwendet werden wie für die dargestellte Vorrichtung) treffende leistungsmodulierte Strahlung erzeugt dort einen elektrischen Signalstrom mit der gleichen Frequenz, mit der der optische Emitter der dargestellten Vorrichtung gepulst wird. Als optische Empfänger 1 finden mehrere Fotodioden Verwendung, die parallel betrieben werden und für Strahlung der Wellenlänge 830 nm empfindlich sind.

Ein Bandfilter 2 begrenzt das vom optischen Empfänger 1 gelieferte elektrische Signal in seinem Spektrum. Die Mittenfrequenz eines solchen Filters 2 liegt beispielsweise bei 2,6 MHz, wobei die Bandbreite 1 MHz beträgt. Durch die Bandfilter 2 werden besondere Störungen durch starke modulierte Störstrahler (beispielsweise Leuchtstoffröhren) unterdrückt.

Das Signal wird nun in einem Mischer 3 mit der lokalen (mit der Sendefunktion dieser Vorrichtung modulierten) Frequenz des zugehörigen Frequenzoszillators 4 gemischt. Dieser Mischer 3 kann beispielsweise als multiplizierendes Element ausgebildet sein.

Die sich im Mischer 3 ergebende Summenfrequenz aus der lokalen Oszillatorfrequenz (mit der Sendefunktion dieser Vorrichtung modulierten Frequenz) und der empfangenen Frequenz, die der optische Empfänger 1 über das Bandfilter 2 liefert, wird über ein Filter 5 zu einem Frequenzverdoppler 6 geführt. Das Filter 5 ist ein Bandfilter mit einer festen Mittenfrequenz, die 5,35 MHz beträgt.

Die beiden Vorrichtungen, zwischen denen die elektrischen Signale übertragen werden, unterscheiden sich nur in der Frequenz des jeweiligen Frequenzoszillators 4. Dabei sind die Frequenzen stets so gewählt, daß die Summe der Frequenzen einen konstanten wohldefinierten Wert aufweist. Es können beliebig viele Frequenzpaare gefunden werden, die diese Bedingung erfüllen.

Wenn solchermaßen bestimmte Frequenzpaare in den Frequenzoszillatoren 4 der beiden Vorrichtungen eingestellt sind, ist es in einfacher Weise möglich, mit dem Signal des jeweiligen Frequenzoszillators 4 sowohl den zugehörigen Emitter 12 über die Stromquelle 11 zu steuern als auch das Signal der anderen Vorrichtung (Gegenstation) im Mischer 3 zu genau der Summenfrequenz zu mischen.

Bei dem vorliegenden Ausführungsbeispiel ist die Mittenfrequenz des Oszillators 4 der dargestellten Vorrichtung auf 2,76 MHz und die des Oszillators der anderen Vorrichtung (nicht dargestellt) auf 2,59 MHz eingestellt. Wenn beide Vorrichtungen optisch gekoppelt sind, so entsteht sowohl im Mischer 3 der dargestellten Vorrichtung als auch im Mischer 3 der nicht dargestellten Vorrichtung die Summe aus eben diesen Frequenzen, hier also 5,35 MHz. Gleiches gilt hierbei auch für andere Frequenzpaare, beispielsweise 1,89 und 3,46, 1,99 und 3,36... 2,56 und 2,79... 2,86 und 2,49 MHz etc..

Der Frequenzverdoppler 6 ist beispielsweise als multiplizierendes Element ausgeführt, wobei den beiden Eingängen des Elementes dasselbe Signal des Bandfilters 5 zugeführt wird. Ein weiteres Bandfilter 7 ist als selektives Element dem Frequenzverdoppler 6 nachgeschaltet. Ein Frequenzdemodulator 8 erzeugt schließlich ein elektrisches Signal, welches aus der linearen Überlagerung der Sendefunktion und der Empfangsfunktion besteht, da der Frequenzoszillator 4, der zur Frequenzumsetzung des empfangenen Signales verwendet wird, mit der Sendefunktionfrequenz moduliert ist.

Durch Subtraktion der Sendefunktion vom Signal des Frequenzdemodulators 8 in einem Subtrahierer 9 wird die Empfangsfunktion erhalten.

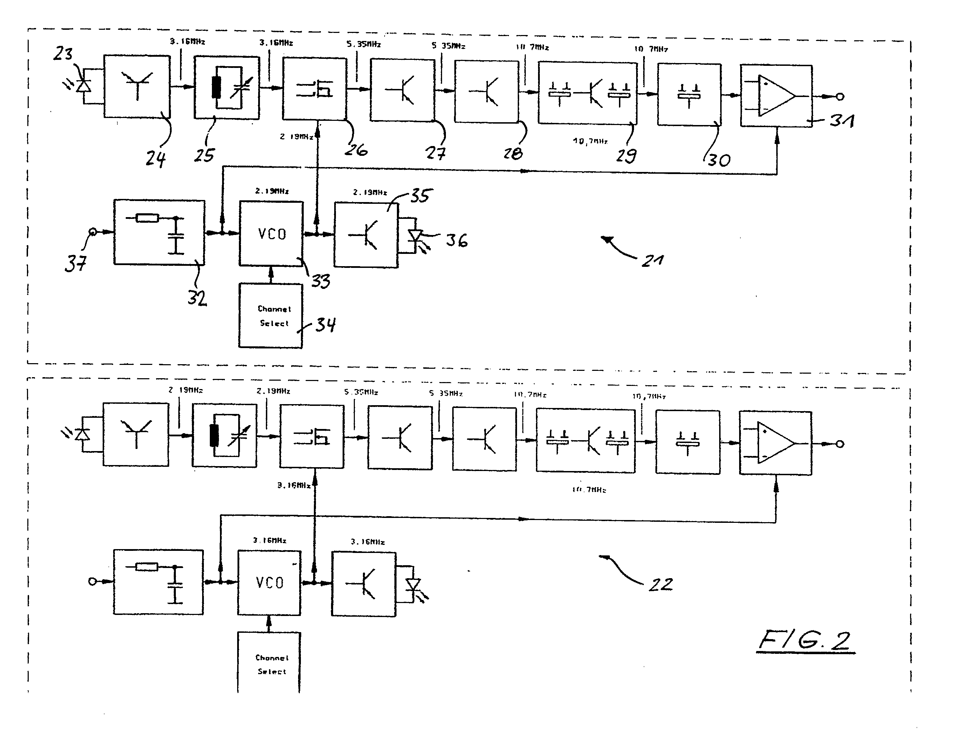

Figur 2 zeigt ein Blockdiagramm einer in der Praxis verwendeten Ausführungsform, bei dem beide Sende-Empfangsteile 21, 22 der Anordnung dargestellt sind. Im folgenden wird nur das Sende-Empfangsteil 21 erläutert, da das andere Sende-Empfangsteil 22 einen entsprechenden Aufbau besitzt.

Wie man Figur 2 entnehmen Kann, besitzt das Sende-Empfangsteil 21 eine Fotodiode 23, die das von einem Infrarot-Emitter 36 des zweiten Sende-Empfangsteils 22 abgegebene Infrarotsignal in ein elektrisches Signal umwandelt. Das von der Fotodiode 23 gelieferte Signal wird über einen Impedanzwandler 24 und einen Bandpaß (tuned circuit) 25 in einem Mischer 26 mit der lokalen VCO-Frequenz eines spannungsgeregelten Oszillators 33 zur ersten Zwischenfrequenz 5,35 MHz gemischt.

Nach Verstärkung durch einen Verstärker 27 erfolgt eine Frequenzverdopplung auf 10,7 MHz in einem Frequenzverdoppler 28. In einem ZF-Verstärker 29 erfolgt in üblicher Weise eine Filterung und Begrenzung des Signals (IF-Amplifier).

Ein FM-Diskriminator 30 gewinnt die Basisband-Information, die in diesem Falle aus der linearen Überlagerung der vom anderen Sende-Empfangsteil 22 übertragenen Nachricht mit der selbst ausgesandten Nachricht besteht. Die zu empfangende Nachricht wird dann durch Subtraktion der eigenen Sendefunktion von diesem Signalgemisch in einer Subtrahierstufe 31 gewonnen.

Das am Signaleingang 37 dieses Sende-Empfangsteils 21 anliegende zu sendende Signal wird in einem Tiefpaßfilter 32 in seiner Bandbreite begrenzt. Dies ist notwendig, um die spektrale Bandbreite nach der Modulation zu limitieren. In bekannter Weise moduliert dieses Signal die Frequenz des spannungsgeregelten Oszillators 33. Die Mittenfrequenz kann über einen Baustein 34 zur Kanaleinstellung verstellt werden.

Das vom spannungsgeregelten Oszillator 33 abgegebene Signal (VCO-Signal) steuert über einen Leistungsverstärker 35 einen entsprechenden Infrarot-Emitter 36 an.

## Patentansprüche

1. Anordnung zur wellenleiterlosen bidirektionalen Licht- oder Infrarotübertragung von elektrischen Signalen, insbesondere Tondarbietungen, digitalen Signalen, Meßwerten oder bewegten Fernsehbildern, zwischen zumindest zwei Vorrichtungen, wobei

   jede Vorrichtung mindestens einen optischen Emitter und mindestens einen optischen Empfänger aufweist;

   die zu übertragenden elektrischen Signale einen Frequenzoszillator mit wohlzugeordneter Mittenfrequenz in der Frequenz steuern und die auf diese Weise modulierte Frequenz des Frequenzoszillators die optische Leistung des optischen Emitters derart steuert,

   daß die vom optischen Emitter in den umgebenden Raum ausgehende leistungsmodulierte Strahlung direkt oder durch Reflektion an natürlichen oder künstlichen Gegenständen, durch Streuung oder durch Beugung auf den optischen Empfänger, der für die Wellenlänge der ausgesandten Strahlung empfindlich ist, der anderen Vorrichtung trifft;

   die auf den optischen Empfänger treffende leistungsmodulierte Strahlung dort in elektrische Signale gewandelt wird; und

   die zu übertragenden elektrischen Signale durch Verarbeitung der empfangenen elektrischen Signale zurückgewonnen werden;

   dadurch gekennzeichnet, daß jede Vorrichtung einen einzigen Frequenzoszillator (4) aufweist, dessen modulierte Frequenz sowohl die optische Leistung des optischen Emitters (12) steuert als auch einer Mischstufe (3) dieser Vorrichtung zugeführt wird,

   die Frequenzoszillatoren (4) beider Vorrichtungen unterschiedliche Mittenfrequenzen besitzen,

das vom optischen Empfänger gelieferte Signal mit der modulierten Frequenz des Frequenzoszillators (4) dieser Vorrichtung in der Mischstufe (3) gemischt wird und

die durch die Mischung entstehende Summenfrequenz aus der empfangenen Frequenz und der modulierten Oszillatorfrequenz über einen Frequenzdemodulator (8) demoduliert und aus dem resultierenden Signal die Empfangsfunktion gewonnen wird.

2. Anordnung nach Anspruch 1, dadurch gekennzeichnet, daß die Mittenfrequenzen der Frequenzoszillatoren (4) veränderlich sind, wobei gewisse wohldefinierte Frequenzen (Kanäle) wählbar sind.

3. Anordnung nach Anspruch 2, dadurch gekennzeichnet, daß die Frequenzoszillatoren (4) beider Vorrichtungen eine Vielzahl von einander zugeordneten Mittenfrequenzpaaren bestitzen, deren Frequenzsumme jeweils den gleichen konstanten wohldefinierten Wert besitzt.

4. Anordnung nach Anspruch 3, dadurch gekennzeichnet, daß durch Zuordnung von Kanalnummern zu den einstellbaren Mittenfrequenzen beider Frequenzoszillatoren (4) zwei Gruppen von Vorrichtungen definiert sind, dergestalt, daß eine Vorrichtung der ersten Gruppe genau dann mit einer Vorrichtung der zweiten Gruppe kommuniziert, wenn an beiden Vorrichtungen die gleiche Kanalnummer eingestellt ist, mithin jedem Kanal eine erste Frequenz und eine zweite Frequenz zugeordnet ist.

5. Anordnung nach Anspruch 4, dadurch gekennzeichnet, daß die Zuordnung der Mittenfrequenzen zu den zugehörigen Kanalnummern so gewählt ist, daß die Summe der Frequenzen aus der ersten Gruppe und der zweiten Gruppe, die einem beliebigen Kanal zugeordnet sind, stets den konstanten und wohldefinierten Summenbetrag ergibt.

6. Anordnung nach einem der vorangehenden Ansprüche, dadurch gekennzeichnet, daß die Mittenfrequenz der Frequenzoszillatoren (4) durch einen PLL(Phase-Locked-Loop)-Regelkreis stabilisiert ist.

7. Anordnung nach einem der vorangehenden Ansprüche, dadurch gekennzeichnet, daß die vom optischen Empfänger (1) gelieferten elektrischen Signale durch Frequenzumsetzung und anschließende Frequenzvervielfachung in einen zur weiteren Verarbeitung günstigen Frequenzbereich gebracht werden.

8. Anordnung nach einem der vorangehenden Ansprüche, dadurch gekennzeichnet, daß das durch die Mischung entstehende Summensignal in seiner Bandbreite durch ein Bandfilter (5, 7) begrenzt und dem Frequenzdemodulator (8) zugeführt wird und daß vom Signal des Frequenzdemodulators (8) in einer nachfolgenden Subtrahierstufe (9) das den Frequenzoszillator (4) dieser Vorrichtung modulierende Signal abgezogen wird.

9. Anordnung nach einem der vorangehenden Ansprüche, dadurch gekennzeichnet, daß als optische Emitter (12) Lumineszenzdioden verwendet werden, wobei die Wellenlänge der ausgesandten Strahlung im Bereich 380 nm bis 1.000 nm liegt.

10. Anordnung nach Anspruch 9, dadurch gekennzeichnet, daß jede Lumineszenzdiode so durch den Frequenzoszillator (4) gesteuert wird, daß der zeitliche Stromverlauf durch die Lumineszenzdiode sinushalbwellenförmig ist.

11. Anordnung nach einem der vorangehenden Ansprüche, dadurch gekennzeichnet, daß als optische Empfänger ein oder mehrere Foto-Sperrschichtempfänger (Fotodioden) mit einer spektralen Empfindlichkeit im Bereich 380 nm bis 1.000 nm verwendet werden.

FIG. 1

FIG.2